# EUROPEAN PATENT APPLICATION

(11) **EP 3 106 435 A1**
(43) Date of publication of application: **21.12.2016**
(21) Application number: 15172742.7
(22) Date of filing: 18.06.2015
(51) Int. Cl.: C01C 1/04, C01B 3/02

(54) **A METHOD FOR REVAMPING AN AMMONIA PLANT**

(71) Applicant: Casale SA, 6900 Lugano (CH)
(72) Inventor: PANZA, Sergio, 22100 Como (IT)
(74) Representative: Zardi, Marco

(57) **Abstract**

A method for revamping a plant for the synthesis of ammonia, wherein the plant comprises a front-end section for production of a make-up gas (1), a compressor (3) for bringing the make-up gas to a synthesis pressure, and a synthesis section (2) to produce ammonia product gas, said plant also comprising at least one vapour-compression refrigerator (15, 21) for condensing the product gas or for cooling the make-up gas, the method providing the additional installation of at least one heat exchanger (40, 41) which is arranged upstream said at least one refrigerator (15, 21) and transfers heat from said product gas or make-up gas to a cooling medium (43, 45), and the installation of an absorption refrigerator (42) of said cooling medium.

## Description

### Field of the invention

The invention relates to the field of plants for the synthesis of ammonia and their revamping.

### Prior art

Ammonia is synthesized at industrial level by catalytic conversion of a make-up synthesis gas (syngas) comprising hydrogen (H₂) and nitrogen (N₂). Said make-up gas is produced by reforming of natural gas or other hydrocarbon in a front-end section including, for example, a reforming section and a purification section. The reforming section may include a primary reformer and a secondary reformer; the purification section typically comprises one or more shift converters, a carbon dioxide removal section and a methanation section. The purified make-up gas is produced at a pressure much lower than the synthesis pressure and is elevated to the synthesis pressure in a suitable gas compression section, usually by a multi-stage compressor.

The synthesis reaction produces a gas predominantly made of ammonia at elevated temperature, typically around 500 °C. The heat content of said product gas is usually recovered in a number of heat exchangers in series, including for example a waste heat boiler and a boiler feed water; the cooled gas is then condensed in a vapour compression refrigerator obtaining a condensed stream of ammonia which is sent to a liquid/gas separator.

As known, the refrigeration of a vapour compression refrigerator depends on a compressor which brings a low-pressure vapour to a higher pressure of condensation. The working fluid is normally ammonia which means the refrigerator comprises an ammonia compressor.

Said compressor is generally driven by a steam turbine which consumes high- or mid-grade steam, which means the compressor introduces a significant and non-negligible consumption of energy. In addition, said compressor can be a bottleneck against a revamping aimed at increasing the capacity of the ammonia plant.

Such a revamping, providing that more ammonia is synthesized, would increase the duty of the vapour compression refrigerator and in most cases the existing refrigerator cannot cope with an increased duty unless the compressor is also revamped or replaced with a new one. Revamping of turbomachinery however is expensive and sometimes not possible, especially in old plants, whereas the provision of a new compressor will introduce a significant cost.

A vapour compression refrigerator may be found also in the feeding line of the make-up gas, for refrigeration of the make-up syngas before or during compression, and poses the same problems outlined above.

### Summary of the invention

The aim of the invention is to solve the above shortcomings of the prior art. In particular, an aim of the invention is to provide a method for revamping an ammonia plant obtaining more capacity and/or energy savings without the need of revamping the existing vapour compression refrigerators.

This aim is reached with a method for revamping a plant for the synthesis of ammonia according to claim 1.

The method comprises the installation of at least a heat exchanger and an absorption refrigerator. The added heat exchanger is arranged upstream an existing vapour-compression refrigerator of the ammonia product or of the make-up gas. The added heat exchanger cools the ammonia product or the make-up gas by transferring heat to a cooling medium, and the cooling medium is refrigerated by the absorption refrigerator. Hence the method of the invention may provide the installation of a suitable circuit of said cooling medium to/from the added heat exchanger(s) and the absorption refrigerator. Said cooling medium is preferably water.

The term of vapour-compression refrigerator denotes a refrigerator using a refrigerant fluid in a closed loop which is evaporated at a first pressure and condensed at a second pressure greater than the first pressure. For example the refrigerant is ammonia.

The absorption refrigerator is known and need not be described in detail. Basically, an absorption refrigerator uses a solution of a refrigerant and a suitable solvent as a working fluid, and uses a source of heat (generally low-grade heat) to regenerate the solution after evaporation. It follows that the driving force of the absorption is a source of heat rather than mechanical compression.

In a preferred embodiment, the plant comprises a first vapour-compression refrigerator arranged to condense the ammonia product gas prior to liquid/gas separation, and a second vapour-compression refrigerator arranged to cool the make-up gas prior to compression or between two consecutive stages of compression. In such a case, the method of the invention preferably comprises the provision of a first heat exchanger upstream said first vapour-compression refrigerator and of a second heat exchanger upstream said second vapour-compression refrigerator. In a more preferred embodiment the invention provides the installation of a common absorption refrigerator for the cooling medium of both said first and second heat exchanger.

The invention can be implemented with various commercially available absorption refrigerators. A preferred embodiment uses a lithium bromide absorption unit. A LiBr unit is particularly preferred when the cooling medium is water, since the LiBr unit can produce chilled water at a temperature of around 5-10 °C.

A notable advantage of the invention is the addition of refrigerant power which is produced from low-grade steam without the revamping of the existing vapour-compression refrigerators, in particular without the need of revamping the related compressors. The added refrigerant power is obtained from low-grade steam (via the absorption refrigerator) which is normally available from the steam system of the ammonia plant. Low-grade steam is generally unable to drive a turbine and produce mechanical power, and the invention provides an efficient use of such steam.

The compressor of a vapour-compression refrigerator, in an ammonia plant, is normally driven by a turbine which consumes steam at a high or medium pressure.

The method of the invention is particularly attractive when the capacity of the ammonia plant is increased since a significant source of cost (i.e. revamping of the refrigerant compressors) is eliminated and then the revamping will be more cost-effective.

It shall be noted that the invention reduces the duty of existing vapour compression refrigerator for a given capacity but does not alter the condition of the related refrigerant, for example ammonia. For example the suction temperature and pressure of the existing refrigerant compressor are not modified, this being an advantage because a change of the operating condition of the existing compressor may deviate from the optimum design condition and result in a loss of efficiency.

The method of the invention can be applied with the aim of increasing the capacity of the ammonia plant or saving energy for a given capacity. As above mentioned, the invention provides an additional refrigeration power which comes from low-grade steam instead of high grade steam which is conventionally used to drive a refrigerant compressor. Hence the invention improves the overall energy efficiency, meaning it saves energy for a given capacity or increases the capacity with a given energy consumption.

Another aspect of the invention is a plant for the synthesis of ammonia according to the claims.

The invention will be elucidated in a greater detail and with reference to a preferred embodiment according to the figures, wherein:
Fig. 1 is a simplified scheme of the synthesis section of an ammonia plant according to the prior art;
Fig. 2 is the scheme of Fig. 1 after a revamping according to a preferred embodiment of the invention.

### Detailed description

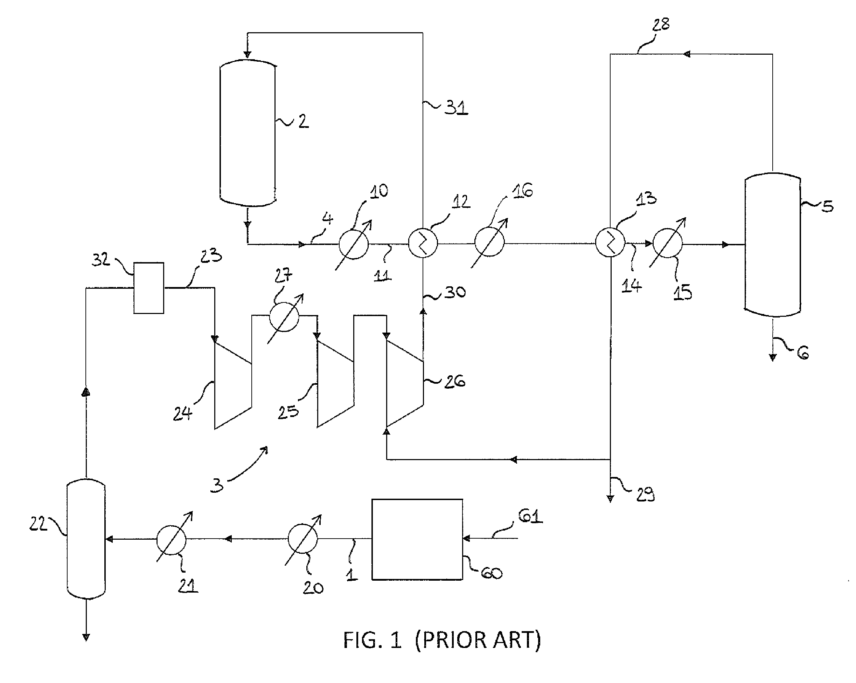

Referring to Fig. 1, a make-up gas 1 containing hydrogen and nitrogen is fed to an ammonia converter 2 of a synthesis section, via a multi-stage compressor 3. The effluent 4 of said converter 2 is a hot gas predominantly composed of ammonia. After a suitable recovery of its heat content, said effluent gas 4 is condensed in an ammonia-refrigerated chiller 15 and sent to a liquid-gas separator 5, obtaining ammonia 6 and a gaseous flow 28 which is at least partly reintroduced in the converter 2.

In most cases, the ammonia-refrigerated chiller 15 uses some ammonia as refrigerant, although a different refrigerant may be used. The refrigerant ammonia is evaporated at a low pressure and condensed at a higher pressure according to the known technique of refrigerant (inverse) thermodynamic cycle. Hence said chiller 15 includes a compressor for raising the low-pressure vapours of refrigerant ammonia to the higher condensation pressure.

A second ammonia-refrigerated chiller 21 is provided to cool the make-up gas 1 before compression or between subsequent stages of compression (inter-refrigeration).

More in detail, the plant comprises a series of heat exchanger to remove the heat content of the hot effluent 4, including for example (Fig. 1) a waste heat boiler 10 which produces hot pressure steam; a heat exchanger 12 which preheats the make-up gas, a water-cooled heat exchanger 16 and another heat exchanger 13 which transfers heat to the overhead gaseous flow 28 of the separator 5.

The so obtained ammonia gas 14, now at a lower temperature, is cooled and condensed (typically to a temperature of less than 10 °C) in the ammonia-refrigerated chiller 15 prior to liquid/gas separation.

The make-up gas 1 is produced in a front-end 60 by reforming of a hydrocarbon 61 and a suitable purification according to known technique. The make-up gas 1 is cooled in a water cooler 20 and then in the second ammonia-refrigerated chiller 21 prior to entering a separator 22 and dryer 32. The dry syngas 23 is compressed through stages 24, 25 and 26 of the compressor 3. An intermediate refrigeration stage 27 between stages 24 and 25 is also shown. The overhead gaseous flow 28 from the separator 5 is also introduced into the suction of a suitable stage of the compressor 3, for example the last compression stage 26, apart from a small purge 29.

The resulting compressed gas 30 is pre-heated in the heat exchanger 12 (with heat removed from the hot effluent gas 4) and is admitted as stream 31 into the ammonia converter 2.

This scheme, with some variations, can be found in several ammonia plants.

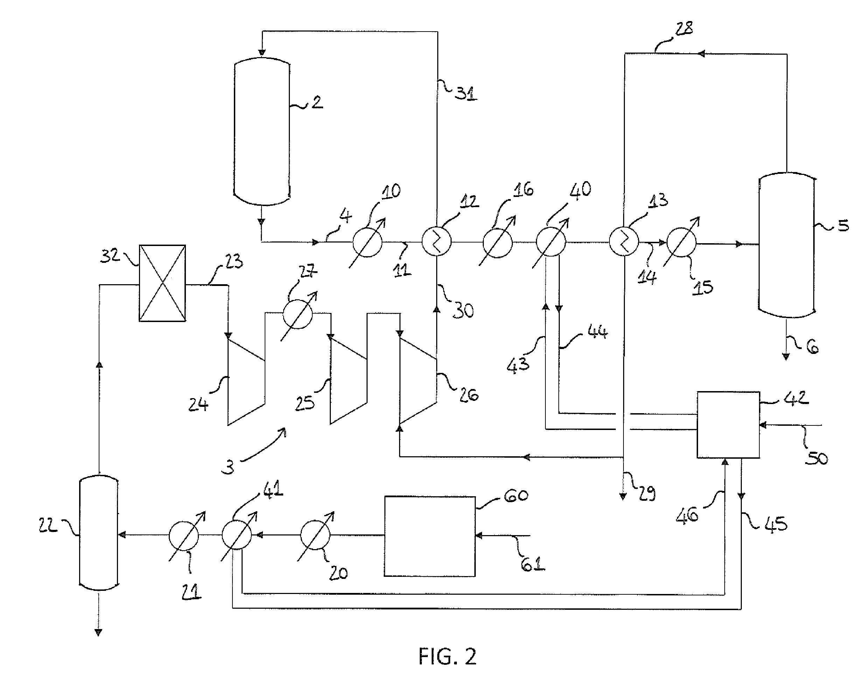

Fig. 2 shows a preferred embodiment of the invention wherein the plant of Fig. 1 is revamped by the addition of chilled water heat exchangers 40 and 41 and of an absorption refrigerator 42.

The first chilled water exchanger 40 is installed upstream the ammonia-refrigerated chiller 15 and removes heat from the ammonia product gas before its condensation. In the example the new exchanger 40 is upstream the gas/gas exchanger 13 but in some embodiments it may arranged immediately upstream the chiller 15.

The second chilled water exchanger 41 is installed upstream the ammonia-refrigerated make-up gas chiller 21 in order to lower the temperature of the make-up gas 1 prior to admission into said chiller 21.

The heat exchangers 40, 41 transfers heat to a cooling water circuit and refrigeration of said circuit is provided by the absorption refrigerator 42. Preferably a common absorption refrigerator provides refrigeration of cooling circuits of both product gas cooler 40 and make-up gas cooler 41 as shown. In Fig. 2, the lines 43 and 45 denote chilled water feed from the refrigerator 42 to the newly added heat exchangers, and lines 44, 46 denote return of water back to the refrigerator 42.

The heat exchangers 40, 41 are termed chilled water exchangers, since they use fresh water produced by the refrigerator 42.

The refrigerator 42 is driven by a source of heat such as low grade steam 50. This steam is preferably taken from the steam system of the plant, e.g. is produced from cooling of a hot stream or of a reactor.

Referring for example to a LiBr machine, the operation is of the refrigerator 42 is basically as follows:
water is evaporated under vacuum in an evaporator section, thus providing the desired refrigeration of return water of lines 44, 46 and producing the fresh water at lines 43, 45;
the resulting water vapour is absorbed by a concentrated LiBr solution in an absorber thus producing a dilute solution;
said dilute solution is regenerated by the heat supplied by steam 50, obtaining water and a concentrated LiBr solution;
the concentrated LiBr solution is returned to the absorber and water is condensed for reuse as refrigerant.

## Claims

1. A method for revamping a plant for the synthesis of ammonia, wherein:
said plant comprises a front-end section for production of a make-up gas (1) containing hydrogen and nitrogen, a compressor (3) for bringing the make-up gas to a synthesis pressure, and a synthesis section (2) operating at said synthesis pressure where said make-up gas is reacted to a product gas containing predominantly ammonia,
said plant also comprises at least one vapour-compression refrigerator (15, 21) of the product gas or of the make-up gas,
the method of revamping being **characterized by** addition of at least one heat exchanger (40, 41) and an absorption refrigerator (42), wherein:
said at least one heat exchanger (40, 41) is arranged upstream said at least one refrigerator (15, 21) and transfers heat from said product gas or make-up gas to a cooling medium (43, 45), and
said cooling medium is refrigerated by said absorption refrigerator.

2. A method according to claim 1, wherein:
said plant comprises a first refrigerator (15) arranged to condense the product gas prior to liquid/gas separation, and a second refrigerator (21) arranged to remove heat from the make-up gas,
and the method comprised the addition of a first heat exchanger (40) upstream said first refrigerator and of a second heat exchanger (41) upstream said second refrigerator.

3. A method according to claim 2, wherein a cooling medium of both the first (40) and second heat exchanger (41) is cooled in a common absorption refrigerator (42).

4. A method according to any of the previous claims, further comprising the installation of cooling medium piping to circulate the cooling medium from the absorption refrigerator to the added heat exchanger(s) and back from the added heat exchanger(s) to the absorption refrigerator.

5. A method according to any of the previous claims, said cooling medium being water.

6. A method according to any of the previous claims, said absorption refrigerator being a lithium bromide unit.

7. A method according to any of the previous claims, said absorption refrigerator using a low grade steam as driving force, and said low grade steam being produced in a steam system of the ammonia plant.

8. A plant for the synthesis of ammonia, comprising:
a front-end section (60) for production of a make-up gas (1) containing hydrogen and nitrogen, a compressor (3) for bringing the make-up gas to a synthesis pressure, and a synthesis section (2) operating at said synthesis pressure where said make-up gas is reacted to a product gas (4) containing predominantly ammonia, and also comprising at least one vapour-compression refrigerator (15, 21) of the product gas or of the make-up gas,
**characterized by** comprising at least one heat exchanger (40, 41) and
an absorption refrigerator (42), wherein:
said heat exchanger is arranged upstream said at least one vapour-compression refrigerator and transfers heat from said product gas or make-up gas to a cooling medium, and
said cooling medium is refrigerated by said absorption refrigerator.
